# EUROPEAN PATENT SPECIFICATION

(11) **EP 4 065 887 B1**
(45) Date of publication and mention of the grant of the patent: **25.10.2023**
(21) Application number: 20828666.6
(22) Date of filing: 20.11.2020
(51) Int. Cl.: F23D 14/06, H01M 8/04014

(54) **COMBUSTION AND HEAT EXCHANGE ASSEMBLY AND SOFC SYSTEM**
VERBRENNUNGS- UND WÄRMETAUSCHERANORDNUNG UND SOFC-SYSTEM
ENSEMBLE DE COMBUSTION ET D'ÉCHANGE DE CHALEUR ET SYSTÈME DE SOFC

(30) Priority: 27.11.2019 CN 201922079167 U
(43) Date of publication of application: 05.10.2022
(73) Proprietor: Ceres Intellectual Property Company Limited, West Sussex RH13 5PX (GB); Weichai Power Co., Ltd., Weifang, Shandong 261061 (CN)
(72) Inventor: WANG, Yang, Weifang, Shandong 261061 (CN); ZHANG, Yi, Weifang, Shandong 261061 (CN)
(74) Representative: Ipside
(86) International application number: PCT/IB2020/060983
(87) International publication number: WO 2021/105834

(56) References cited:
- EP-A1- 2 704 242
- EP-A1- 3 208 878
- DE-A1- 19 852 853
- US-A1- 2003 188 735
- US-A1- 2014 076 302

## Description

### TECHNICAL FIELD

The present invention relates to the technical field of fuel cells, more specifically to a combustion and heat exchange assembly and a solid oxide fuel cell (SOFC) system.

### BACKGROUND ART

An SOFC (solid oxide fuel cell) system is a fuel cell using solid oxide as an electrolyte and working at high temperature. The SOFC system comprises a burner and an air heat exchanger. The burner is a component for combustion and exhausting, and the air heat exchanger mainly uses the exhaust of the burner to heat intake air.

In the known art, the burner is connected to the air heat exchanger through a pipeline. The burner and the air heat exchanger arranged in this way have a large volume. A large volume and weight is not conducive to arranging the SOFC system in a vehicle.

EP 2 704 242 A1 discloses an solid oxide fuel cell with an integrated burner, reformer and heat exchanger.

### SUMMARY OF THE INVENTION

A first object of the present invention is to provide a combustion and heat exchange assembly with a structure designed to effectively solve the problem of a large volume of the burner and the air heat exchanger, which is not conducive to arrangement in a vehicle. A second object of the present invention is to provide an SOFC system comprising the foregoing combustion and heat exchange assembly.

A first aspect of the invention provides a combustion and heat exchange assembly of an SOFC system, comprising:
a casing and a partition arranged inside the casing, wherein the partition divides the interior of the casing into a combustion chamber and a heat exchange chamber;
a combustion unit arranged inside the combustion chamber, wherein the combustion unit comprises an igniter, a combustion nozzle, a fuel gas supply pipe, and an air director,
wherein the combustion nozzle comprises a central cavity and a plurality of flame channels in communication with the central cavity, a plurality of through holes for projecting flames are arranged on a side of the flame channels adjacent to the partition, and the air director is used for directing air into the central cavity; and
a heat exchange unit arranged inside the heat exchange chamber, wherein the heat exchange unit comprises a cold channel and a hot channel which are independent of each other, and a gas flow port in communication with the hot channel is arranged on the partition.

The combustion unit can further comprise a flame monitor arranged on the upper side of the combustion nozzle.

The combustion unit can further comprise a flame holder arranged on a side of the combustion nozzle adjacent to the partition.

A cross section of the flame holder can be in a shape of a continuous W, in which case the flame holder is internally provided with a plurality of W-shaped channels, an end face of the flame holder farther from the partition is provided with a plurality of inlets, and an end face of the flame holder adjacent to the partition is provided with a plurality of outlets.

The combustion unit can further comprise a catalytic burner arranged on a side of the combustion nozzle adjacent to the partition, wherein the catalytic burner has a porous plate structure, and the porous plate structure is coated with a catalyst.

The combustion and heat exchange assembly can further comprise an air shunt, which comprises a first outlet and a second outlet, in which case the combustion and heat exchange assembly further comprises an isolation hood arranged inside the combustion chamber, wherein the isolation hood covers above the igniter, the air director, and the combustion nozzle, the first outlet of the air shunt is in communication with the interior of the isolation hood and with the air director, the second outlet of the air director is in communication with the exterior of the isolation hood, and the combustion tail gas discharged from the isolation hood enters the hot channel after being mixed with the air outside the isolation hood.

The fuel gas supply pipe can comprise a convergence section and a sub-supply section, and the sub-supply section comprises a first pipe and a second pipe arranged in parallel.

The heat exchange unit can comprise a plurality of heat exchange fins.

The flame channels can include an annular channel and a plurality of radial channels, wherein one end of each of the radial channels is in communication with the central cavity and the other end is in communication with the annular channel.

A second aspect of the invention provides an SOFC system comprising the combustion and heat exchange assembly.

The combustion and heat exchange assembly of an SOFC system provided by the present invention comprises a casing, a partition, a combustion unit and a heat exchange unit. The partition is arranged inside the casing and divides the interior of the casing into a combustion chamber and a heat exchange chamber.

The combustion unit is arranged inside the combustion chamber and comprises an igniter, a combustion nozzle, a fuel gas supply pipe, and an air director. The igniter is used for igniting fuel gas. The combustion nozzle comprises a central cavity and a plurality of flame channels in communication with the central cavity, and a plurality of through holes for projecting flames are arranged on a side of the flame channels adjacent to the partition. Fuel gas is mixed with air in the central cavity and is ignited in the central cavity. The air director is used for directing air into the central cavity. The fuel gas supply pipe is used for supplying fuel gas into the central cavity.

The heat exchange unit is arranged inside the heat exchange chamber and comprises a cold channel and a hot channel which are independent of each other. A gas flow port in communication with the hot channel is arranged on the partition. In other words, the tail gas inside the combustion chamber can enter the hot channel via the gas flow port.

When the combustion and heat exchange assembly provided by the foregoing embodiment is applied, the air director is used to direct air into the central cavity, the fuel gas supply pipe supplies fuel gas to the central cavity, the igniter ignites the fuel gas inside the central cavity, and the ignited fuel gas enters the plurality of flame channels and then is spurted out from the through holes on the combustion nozzle. The tail gas inside the combustion chamber enters the hot channel via the gas flow port. The combustion tail gas inside the hot channel exchanges heat with the fluid inside the cold channel to raise the temperature of the fluid inside the cold channel and achieve the purpose of heat exchange. Specifically, the fluid inside the cold channel can be fresh air entering a solid fuel cell stack. In other words, before entering the stack, the air is heated inside the cold channel. The air entering the combustion chamber can be the air left after fuel cell reactions, i.e., the air entering the combustion chamber is gas discharged from the stack.

The present invention further comprises an SOFC system. The SOFC system comprises any of the foregoing combustion and heat exchange assemblies. As the combustion and heat exchange assemblies possess the stated technical effects, the SOFC system comprising any of the combustion and heat exchange assemblies will also possess the corresponding technical effects.

### BRIEF DESCRIPTION OF THE DRAWINGS

The drawings in the following description show some embodiments of the present invention.
Fig. 1 is a structural schematic view of a combustion and heat exchange assembly.
Fig. 2 is another structural schematic view of a combustion and heat exchange assembly.
Fig. 3 is a gas flow diagram of a combustion and heat exchange assembly.
Fig. 4 is another gas flow diagram of a combustion and heat exchange assembly.
Fig. 5 is a structural schematic view of an air shunt.
Fig. 6 is a structural schematic view of a combustion nozzle.
Fig. 7 is a structural schematic view of a catalytic burner.
Fig. 8 is a structural schematic view of a heat exchange unit.

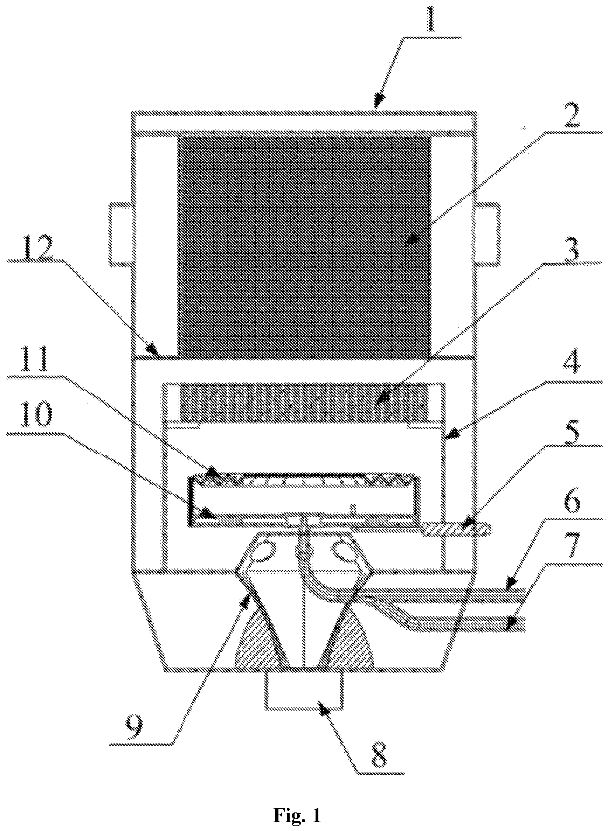

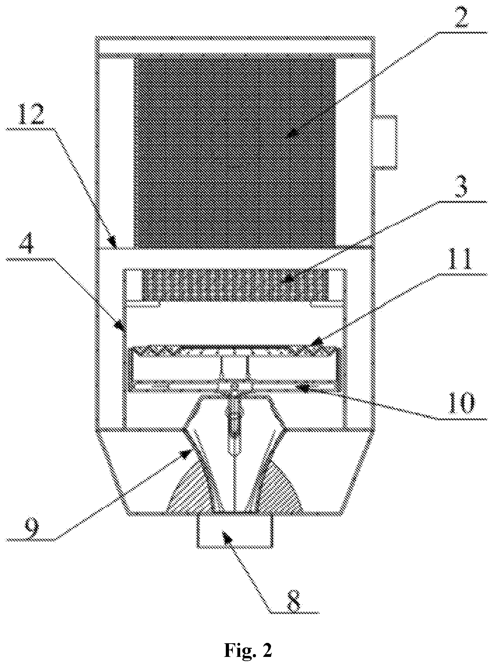

The following reference numerals are used in Fig. 1 to Fig. 8: 1-casing, 2-heat exchange unit, 2a-heat exchange fin, 3-catalytic burner, 4-isolation hood, 5-igniter, 6-first pipe, 7-second pipe, 8-stack air outlet, 9-air shunt, 9a-first outlet, 9b-second outlet, 10-combustion nozzle, 10a-annular channel, 10b-radial channel, 11-flame holder, 12-partition.

### DETAILED DESCRIPTION

A first object of the present invention is to provide a combustion and heat exchange assembly with a structure designed to effectively solve the problem of a large volume of the burner and the air heat exchanger, which is not conducive to arrangement in a vehicle. A second object of the present invention is to provide an SOFC system comprising the foregoing combustion and heat exchange assembly.

Embodiments of the present invention will be described below in conjunction with the drawings. The described embodiments are only some, not all of the embodiments of the present invention.

In the description of the present invention, terms indicating directional or positional relations such as "over," "on," "above," "below," "under," "front," "rear," "left" and "right" are based on the directional or positional relations shown in the drawings. They are only for facilitating and simplifying the description of the present invention, and do not indicate or imply that the devices or elements in question must possess specific directions or be constructed and operated in specific directions, so they are not limitations to this solution. Further, the terms "first" and "second" are for description only and do not indicate or imply relative importance or implicitly indicate the quantity of the demonstrated technical features.

As shown in Fig. 1 to Fig. 8, the combustion and heat exchange assembly of an SOFC system provided by the present invention comprises a casing 1, a partition 12, a combustion unit, and a heat exchange unit 2. The partition 12 is arranged inside the casing 1 and divides the interior of the casing 1 into a combustion chamber and a heat exchange chamber.

The combustion unit is arranged inside the combustion chamber and comprises an igniter 5, a combustion nozzle 10, a fuel gas supply pipe, and an air director. The igniter 5 is used for igniting fuel gas. The combustion nozzle 10 comprises a central cavity and a plurality of flame channels in communication with the central cavity, and a plurality of through holes for projecting flames are arranged on a side of the flame channels adjacent to the partition 12. Fuel gas is mixed with air in the central cavity and is ignited in the central cavity. The air director is used for directing air into the central cavity. The fuel gas supply pipe is used for supplying fuel gas into the central cavity.

The heat exchange unit 2 is arranged inside the heat exchange chamber and comprises a cold channel and a hot channel, which are independent of each other. A gas flow port in communication with the hot channel is arranged on the partition 12. In other words, the tail gas inside the combustion chamber can enter the hot channel via the gas flow port.

When the combustion and heat exchange assembly provided by the foregoing embodiment is applied, the air director is used to direct air into the central cavity, the fuel gas supply pipe supplies fuel gas to the central cavity, the igniter 5 ignites the fuel gas inside the central cavity, and the ignited fuel gas enters the plurality of flame channels and then is projected from the through holes on the combustion nozzle 10. The tail gas inside the combustion chamber enters the hot channel via the gas flow port. The combustion tail gas inside the hot channel exchanges heat with the fluid inside the cold channel to raise the temperature of the fluid inside the cold channel and achieve the purpose of heat exchange. Specifically, the fluid inside the cold channel can be fresh air entering a solid fuel cell stack. In other words, before entering the stack, the air is heated inside the cold channel. The air entering the combustion chamber can be the air left after fuel cell reactions, i.e., the air entering the combustion chamber is gas discharged from the stack. The air director can be in communication with the stack air outlet 8.

In the combustion and heat exchange assembly provided by the present invention, the combustion unit and the heat exchange unit 2 are integrated inside the casing 1 to significantly reduce the volume of the SOFC system and facilitate the use of the SOFC system in a vehicle. Moreover, the flame inside the combustion chamber is projected from a plurality of through holes on the combustion nozzle 10 to form thin and short stable flames, which significantly reduce the length of the flames compared with a large flame in the prior art, thereby significantly reducing the total length of the combustion chamber portion and the volume of the SOFC system.

In one embodiment, the combustion unit further comprises a flame monitor arranged on the upper side of the combustion nozzle 10 to facilitate timely detection of the intensity of the flame inside the combustion chamber.

Additionally, in order to further ensure flame stability, the combustion unit also comprises a flame holder 11 arranged on a side of the combustion nozzle 10 adjacent to the partition 12.

Specifically, a cross section of the flame holder 11 is in a shape of a continuous W, the flame holder 11 is internally provided with a plurality of W-shaped channels, an end face of the flame holder 11 farther from the partition 12 is provided with a plurality of inlets, and an end face of the flame holder 11 adjacent to the partition 12 is provided with a plurality of outlets. When a flame meets the flame holder 11, the flame enters the W-shaped channels via an inlet of the flame holder 11, and then is discharged from an outlet of the flame holder 11. When the working condition is changed, the height of the flame airflow will be changed accordingly. This W-shaped flame holder 11 can adapt to flames in various lengths. Further, when the flame airflow flows inside the flame holder 11, the fuel gas is combusted continuously to achieve sufficient combustion.

Here, the heat exchange chamber can be located on the upper side of the combustion chamber. In this case, the flame airflow flows downwards and meets the flame holder 11, and the tail gas of the combustion chamber will also automatically enter the heat exchange chamber.

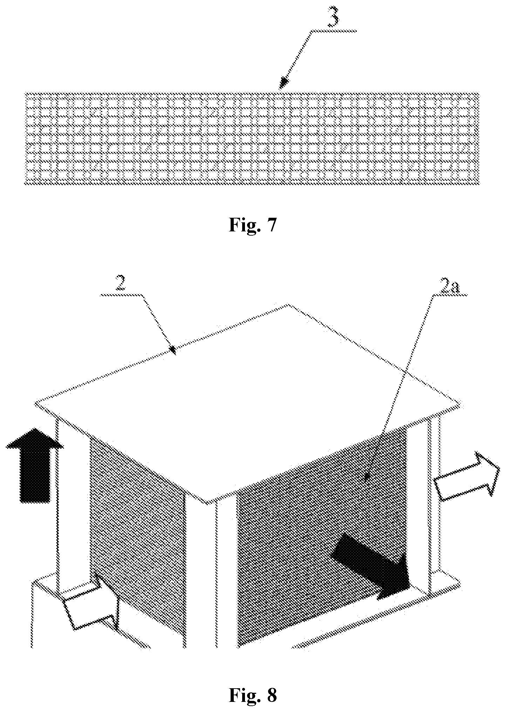

As shown in Fig. 7, the combustion unit further comprises a catalytic burner 3 arranged on a side of the combustion nozzle 10 adjacent to the partition 12, the catalytic burner 3 has a porous plate structure, and the porous plate structure is coated with a catalyst. Through this setting, the flue gas after combustion undergoes catalytic combustion in the catalytic burner 3 so that the unburned fuel is further reacted. The catalytic burner 3 can be located on the upper side of the flame holder 11.

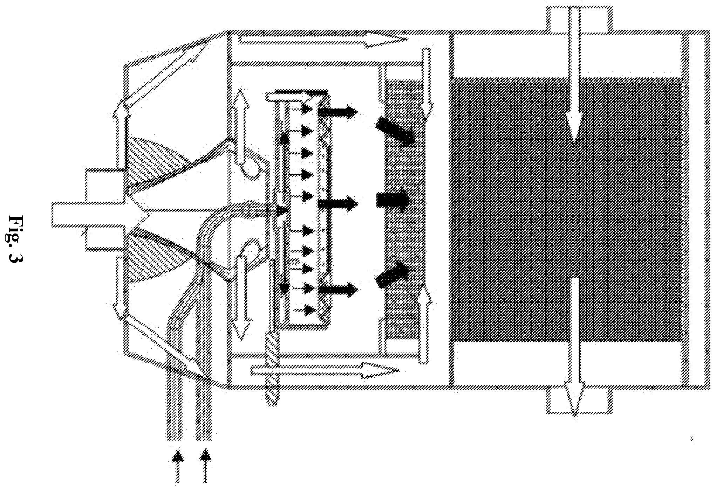

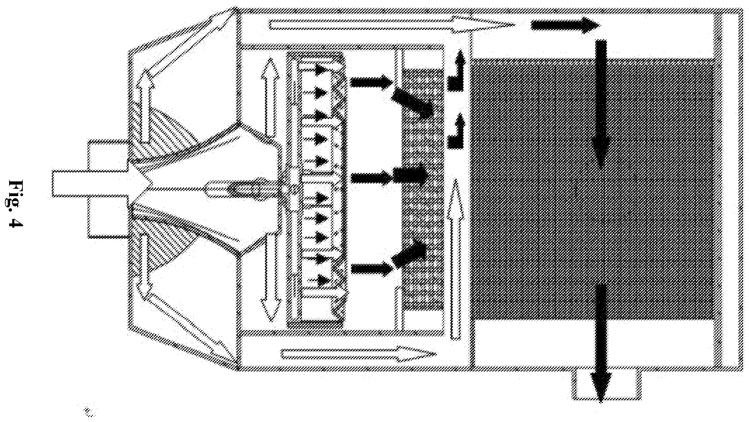

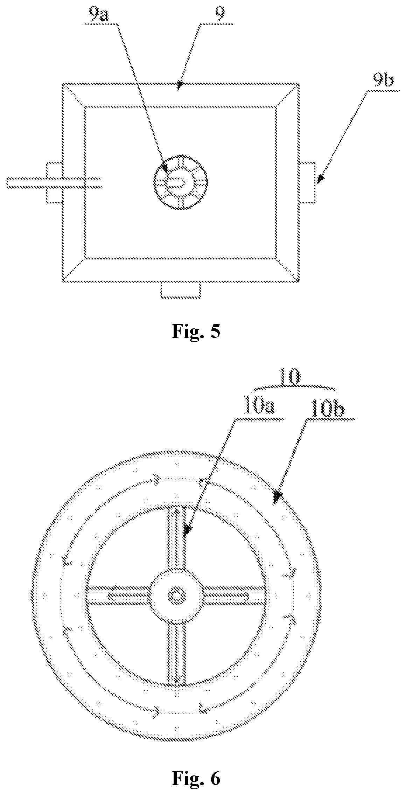

As shown in Fig. 5, in another embodiment, the combustion and heat exchange assembly may further comprise an air shunt 9 and an isolation hood 4. The air shunt 9 comprises a first outlet 9a and a second outlet 9b. The isolation hood 4 is arranged inside the combustion chamber and covers above the igniter 5, the air director and the combustion nozzle 10, the first outlet 9a of the air shunt 9 is in communication with the interior of the isolation hood 4, i.e., the first outlet 9a of the air shunt 9 is in communication with the air director, the second outlet 9b of the air shunt 9 is in communication with the exterior of the isolation hood 4, and the combustion tail gas discharged from the isolation hood 4 enters the hot channel after being mixed with the air outside the isolation hood 4. As shown in Fig. 3 and Fig. 4, white arrows show the flow directions of air or stack air, and black arrows show the flow directions of flame airflows. An inner duct is formed inside the isolation hood 4, an outer duct is formed outside the isolation hood 4, and a part of the air or stack air entering via the air shunt 9 enters the air director via the first outlet 9a and then enters the central cavity of the combustion nozzle 10 and is mixed with fuel gas and combusted. Another part of the air or stack air entering via the air shunt 9 enters the outer side of the isolation hood 4 via the second outlet 9b and flows through the outer duct. In the end, the air located outside the isolation hood 4 and flowing through the outer duct is mixed with the tail gas generated from combustion and then enters the hot channel. This setting can prevent the temperature of the gas entering the hot channel from being too high.

In one embodiment, the fuel gas supply pipe comprises a convergence section and a sub-supply section, and the sub-supply section comprises a first pipe 6 and a second pipe 7 arranged in parallel. An outlet of the first pipe 6 and an outlet of the second pipe 7 are both in communication with an inlet of the convergence section, and an outlet of the convergence section faces the interior of the central cavity. The first pipe 6 can be used for transporting nitroglycerin (NG), and the second pipe 7 can be used for transporting anode off gas (AOG). In the early stage of combustion, only NG can be burned, then AOG is gradually added, and then NG is gradually replaced by AOG.

As shown in Fig. 8, the heat exchange unit 2 comprises a plurality of heat exchange fins 2a. Brazed connection is adopted between the heat exchange fins 2a. Hot channels and cold channels perpendicular to each other are arranged on both the front side and back side of the heat exchange unit 2. Of course, alternatively, the structure of the heat exchange unit 2 can be designed and improved according to test results.

As shown in Fig. 6, the annular channel 10a is a round channel, the flame channels include an annular channel 10a and a plurality of radial channels 10b, one end of each of the radial channels 10b is in communication with the central cavity, and the other end is in communication with the annular channel 10a. The combustion nozzle 10 has a disc structure as a whole, fuel gas enters the central cavity from the middle, and fuel gas and air are mixed in the central cavity and then uniformly fill up the annular channel 10a via the radial channels. The annular channel 10a can also be in a square or other shape. The diameter of and space between the through holes can be set according to actual needs.

Based on the combustion and heat exchange assemblies provided by the foregoing embodiments, the present invention further provides an SOFC system, comprising any one of the combustion and heat exchange assemblies in the foregoing embodiments. As the SOFC system adopts a combustion and heat exchange assembly in one of the foregoing embodiments, the beneficial effects of the SOFC system can be seen in these embodiments.

The embodiments in the description are all described in a progressive manner, each embodiment focuses on the differences from other embodiments, and the same or similar parts among the embodiments can be mutually referred to.

Various modifications to these embodiments will be apparent. The general principle defined herein can be implemented in other embodiments without departing from the scope of the present invention. Therefore, the present invention is not limited to the embodiments provided herein but conforms to the widest scope consistent with the principles and novel features disclosed herein.

Herein, the description with reference to the terms "one embodiment," "example," "specific example," etc. means that the specific features, structures, materials, or characteristics described in combination with the embodiment or example are included in at least one embodiment or example of the invention. The schematic representation of the above-mentioned terms herein does not necessarily refer to the same embodiment or example. Moreover, the specific features, structures, materials, or characteristics described can be combined in any one or multiple embodiments or examples in a suitable manner.

## Claims

1. A combustion and heat exchange assembly for a solid oxide fuel cell (SOFC) system, comprising:
a casing (1) and a partition (12) arranged inside the casing (1), wherein the partition (12) divides the interior of the casing (1) into a combustion chamber and a heat exchange chamber;
a combustion unit arranged inside the combustion chamber, comprising:
an igniter (5);
a combustion nozzle (10);
a fuel gas supply pipe; and
an air director;
wherein:
the combustion nozzle (10) comprises a central cavity and a plurality of flame channels (10a,10b) in communication with the central cavity;
a plurality of through holes for projecting flames are arranged on a side of the flame channels (10a,10b) adjacent to the partition (12); and the air director is used for directing air into the central cavity; and
a heat exchange unit (2) arranged inside the heat exchange chamber, wherein the heat exchange unit (2) comprises a cold channel and a hot channel, which are independent of each other, and a gas flow port in communication with the hot channel is arranged on the partition (12).

2. The combustion and heat exchange assembly according to claim 1, further comprising a flame monitor arranged on the upper side of the combustion nozzle (10).

3. The combustion and heat exchange assembly according to claim 1 or 2, further comprising a flame holder (11) arranged on a side of the combustion nozzle (10) adjacent to the partition (12).

4. The combustion and heat exchange assembly according to claim 3, wherein:
a cross section of the flame holder (11) is in a shape of a continuous W;
the flame holder (11) is internally provided with a plurality of W-shaped channels;
an end face of the flame holder (11) farther from the partition (12) is provided with a plurality of inlets; and
an end face of the flame holder (11) adjacent to the partition (12) is provided with a plurality of outlets.

5. The combustion and heat exchange assembly according to any preceding claim, further comprising a catalytic burner (3) arranged on a side of the combustion nozzle (10) adjacent to the partition (12), wherein the catalytic burner (3) has a porous plate structure, and the porous plate structure is coated with a catalyst.

6. The combustion and heat exchange assembly according to any preceding claim, wherein the combustion and heat exchange assembly further comprises:
an air shunt (9), which comprises a first outlet (9a) and a second outlet (9b); and
an isolation hood (4) arranged inside the combustion chamber;
wherein:
the isolation hood (4) covers above the igniter (5), the air director, and the combustion nozzle (10);
the first outlet (9a) of the air shunt (9) is in communication with the interior of the isolation hood (4) and with the air director;
the second outlet (9b) of the air director is in communication with the exterior of the isolation hood (4); and
combustion tail gas discharged from the isolation hood (4) is directed to enter the hot channel after being mixed with the air outside the isolation hood (4).

7. The combustion and heat exchange assembly according to any preceding claim, wherein the fuel gas supply pipe comprises a convergence section and a sub-supply section, and the sub-supply section comprises a first pipe (6) and a second pipe (7) arranged in parallel.

8. The combustion and heat exchange assembly according to any preceding claim, wherein the heat exchange unit (2) comprises a plurality of heat exchange fins (2a).

9. The combustion and heat exchange assembly according to any preceding claim, wherein the flame channels include an annular channel (10a) and a plurality of radial channels (10b), wherein one end of each of the radial channels (10b) is in communication with the central cavity and the other end is in communication with the annular channel (10a).

10. An SOFC system, wherein the SOFC system comprises the combustion and heat exchange assembly according to any one of claims 1 to 9.

## Patentansprüche

1. Verbrennungs- und Wärmetauscherbaugruppe für ein Festoxidbrennstoffzellensystem (SOFC), umfassend:
Ein Gehäuse (1) und eine innerhalb des Gehäuses (1) angeordnete Trennwand (12), wobei die Trennwand (12) das Innere des Gehäuses (1) in eine Brennkammer und eine Wärmeaustauschkammer unterteilt;
eine in der Brennkammer angeordnete Verbrennungseinheit, umfassend:
Einen Zünder (5);
eine Verbrennungsdüse (10);
eine Brenngasversorgungsleitung; und
einen Flugdirektor;
wobei:
Die Verbrennungsdüse (10) einen zentralen Hohlraum und eine Vielzahl von Flammenkanälen (10a, 10b) umfasst, die mit dem zentralen Hohlraum kommunizieren;
eine Vielzahl von Durchgangslöchern zum Vorsprung der Flammen auf einer Seite der Flammenkanäle (10a, 10b) neben der Trennwand (12) angeordnet sind; und
der Luftdirektor zum Richten von Luft in den zentralen Hohlraum verwendet wird; und
eine Wärmeaustauscheinheit (2), die innerhalb der Wärmeaustauschkammer angeordnet ist, wobei die Wärmeaustauscheinheit (2) einen kalten Kanal und einen heißen Kanal umfasst, die unabhängig voneinander sind, und ein Gasflussanschluss, der mit dem heißen Kanal kommuniziert, an der Trennwand (12) angeordnet ist.

2. Verbrennungs- und Wärmeaustauschbaugruppe nach Anspruch 1, die ferner einen Flammenwächter umfasst, der an der Oberseite der Verbrennungsdüse (10) angeordnet ist.

3. Verbrennungs- und Wärmetauscherbaugruppe nach Anspruch 1 oder 2, die ferner einen Flammenhalter (11) umfasst, der auf einer Seite der Verbrennungsdüse (10) angrenzend an die Trennwand (12) angeordnet ist.

4. Verbrennungs- und Wärmeaustauscheinheit nach Anspruch 3, wobei:
Der Querschnitt des Flammenhalters (11) die Form eines durchgehenden W aufweist;
der Flammenhalter (11) innen mit einer Vielzahl von W-förmigen Kanälen bereitgestellt ist;
eine Endfläche des Flammenhalters (11), die weiter von der Trennwand (12) entfernt ist, mit einer Vielzahl von Einlässen bereitgestellt wird; und
eine Endfläche des Flammenhalters (11), die an die Trennwand (12) angrenzt, mit einer Vielzahl von Auslässen bereitgestellt ist.

5. Verbrennungs- und Wärmetauscherbaugruppe nach einem der vorstehenden Ansprüche, ferner umfassend einen katalytischen Brenner (3), der auf einer Seite der Verbrennungsdüse (10) angrenzend an die Trennwand (12) angeordnet ist, wobei der katalytische Brenner (3) eine poröse Plattenstruktur aufweist und die poröse Plattenstruktur mit einem Katalysator beschichtet ist.

6. Verbrennungs- und Wärmetauscherbaugruppe nach einem der vorstehenden Ansprüche, wobei die Verbrennungs- und Wärmetauscherbaugruppe ferner Folgendes umfasst:
Eine Luftweiche (9), die einen ersten Auslass (9a) und einen zweiten Auslass (9b) umfasst; und
eine Isolierhaube (4), die im Inneren der Brennkammer angeordnet ist;
wobei:
die Isolierhaube (4) über dem Zünder (5), dem Luftdirektor und der Verbrennungsdüse (10) abdeckt;
der erste Auslass (9a) des Luftverteilers (9) mit dem Inneren der Isolierhaube (4) und mit dem Luftdirektor kommuniziert;
der zweite Auslass (9b) des Luftleiters mit der Außenseite der Isolierhaube (4) kommuniziert; und
das aus der Isolierhaube (4) austretende Verbrennungsabgas nach der Vermischung mit der Luft außerhalb der Isolierhaube (4) in den heißen Kanal gerichtet wird.

7. Verbrennungs- und Wärmetauscherbaugruppe nach einem der vorstehenden Ansprüche, wobei die Brenngasversorgungsleitung einen Konvergenzabschnitt und einen Unterversorgungsabschnitt umfasst, und der Unterversorgungsabschnitt ein erstes Rohr (6) und ein zweites Rohr (7) umfasst, die parallel angeordnet sind.

8. Verbrennungs- und Wärmeaustauscheinheit nach einem der vorstehenden Ansprüche, wobei die Wärmeaustauscheinheit (2) eine Vielzahl von Wärmeaustauschrippen (2a) umfasst.

9. Verbrennungs- und Wärmetauscherbaugruppe nach einem der vorstehenden Ansprüche, wobei die Flammenkanäle einen ringförmigen Kanal (10a) und eine Vielzahl von radialen Kanälen (10b) einschließen, wobei ein Ende jedes der radialen Kanäle (10b) mit dem zentralen Hohlraum und das andere Ende mit dem ringförmigen Kanal (10a) kommuniziert.

10. SOFC-System, wobei das SOFC-System die Verbrennungs- und Wärmeaustauschanordnung nach einem der Ansprüche 1 bis 9 umfasst.

## Revendications

1. Ensemble de combustion et d'échange de chaleur pour un système de pile à combustible à oxyde solide (SOFC), comprenant :
un boîtier (1) et une cloison (12) agencée à l'intérieur du boîtier (1), dans lequel la cloison (12) divise l'intérieur du boîtier (1) en une chambre de combustion et une chambre d'échange de chaleur ;
une unité de combustion agencée à l'intérieur de la chambre de combustion, comprenant :
un allumeur (5) ;
une buse de combustion (10) ;
un tuyau d'alimentation en gaz combustible ; et
un directeur d'air ;
dans lequel :
la buse de combustion (10) comprend une cavité centrale et une pluralité de canaux de flamme (10a, 10b) en communication avec la cavité centrale ;
une pluralité de trous traversants pour projeter des flammes sont agencés sur un côté des canaux de flamme (10a, 10b) adjacent à la cloison (12) ; et
le directeur d'air est utilisé pour diriger l'air à l'intérieur de la cavité centrale ; et
une unité d'échange de chaleur (2) agencée à l'intérieur de la chambre d'échange de chaleur, dans lequel l'unité d'échange de chaleur (2) comprend un canal froid et un canal chaud, qui sont indépendants l'un de l'autre, et un orifice d'écoulement de gaz en communication avec le canal chaud est agencé sur la cloison (12).

2. Ensemble de combustion et d'échange de chaleur selon la revendication 1, comprenant en outre un dispositif de détection de flamme agencé sur le côté supérieur de la buse de combustion (10).

3. Ensemble de combustion et d'échange de chaleur selon la revendication 1 ou 2, comprenant en outre un stabilisateur de flammes (11) agencé sur un côté de la buse de combustion (10) adjacent à la cloison (12).

4. Ensemble de combustion et d'échange de chaleur selon la revendication 3, dans lequel :
une section transversale du stabilisateur de flammes (11) est en forme d'un W continu ;
le stabilisateur de flammes (11) est doté de manière interne d'une pluralité de canaux en forme de W ;
une face d'extrémité du stabilisateur de flammes (11) la plus éloignée de la cloison (12) est dotée d'une pluralité d'entrées ; et
une face d'extrémité du stabilisateur de flammes (11) adjacente à la cloison (12) est dotée d'une pluralité de sorties.

5. Ensemble de combustion et d'échange de chaleur selon une quelconque revendication précédente, comprenant en outre un brûleur catalytique (3) agencé sur un côté de la buse de combustion (10) adjacent à la cloison (12), dans lequel le brûleur catalytique (3) présente une structure plate poreuse, et la structure plate poreuse est revêtue d'un catalyseur.

6. Ensemble de combustion et d'échange de chaleur selon une quelconque revendication précédente, dans lequel l'ensemble de combustion et d'échange de chaleur comprend en outre :
une dérivation d'air (9), qui comprend une première sortie (9a) et une deuxième sortie (9b) ; et
un capot d'isolation (4) agencé à l'intérieur de la chambre de combustion ;
dans lequel :
le capot d'isolation (4) recouvre le dessus de l'allumeur (5), du directeur d'air, et de la buse de combustion (10) ;
la première sortie (9a) de la dérivation d'air (9) est en communication avec l'intérieur du capot d'isolation (4) et avec le directeur d'air ;
la deuxième sortie (9b) du directeur d'air est en communication avec l'extérieur du capot d'isolation (4) ; et
le gaz résiduaire de combustion évacué du capot d'isolation (4) est dirigé pour entrer dans le canal chaud après avoir été mélangé à l'air à l'extérieur du capot d'isolation (4).

7. Ensemble de combustion et d'échange de chaleur selon une quelconque revendication précédente, dans lequel le tuyau d'alimentation en gaz combustible comprend une section de convergence et une section de sous-alimentation, et la section de sous-alimentation comprend un premier tuyau (6) et un deuxième tuyau (7) agencés en parallèle.

8. Ensemble de combustion et d'échange de chaleur selon une quelconque revendication précédente, dans lequel l'unité d'échange de chaleur (2) comprend une pluralité d'ailettes d'échange de chaleur (2a).

9. Ensemble de combustion et d'échange de chaleur selon une quelconque revendication précédente, dans lequel les canaux de flamme comportent un canal annulaire (10a) et une pluralité de canaux radiaux (10b), dans lequel une extrémité de chacun des canaux radiaux (10b) est en communication avec la cavité centrale et l'autre extrémité est en communication avec le canal annulaire (10a).

10. Système SOFC, dans lequel le système SOFC comprend l'ensemble de combustion et d'échange de chaleur selon l'une quelconque des revendications 1 à 9.
